# EUROPÄISCHE PATENTSCHRIFT

(11) **EP 0 557 735 B1**
(45) Veröffentlichungstag und Bekanntmachung des Hinweises auf die Patenterteilung: **03.01.1996**
(21) Anmeldenummer: 93101364.3
(22) Anmeldetag: 29.01.1993
(51) Int. Cl.: B62M 3/08

(54) **Vorrichtung zur Befestigung eines Schuhes an einem Fahrradpedal**
Device for fixing a shoe to a bicycle pedal
Dispositif de fixation d'une chaussure sur une pédale de bicyclette

(30) Priorität: 27.02.1992 DE 4206106
(43) Veröffentlichungstag der Anmeldung: 01.09.1993
(73) Patentinhaber: LOOK S.A., F-58028 Nevers Cédex (FR)
(72) Erfinder: Peyre, Henri, F-58270 St. Benin d'Azy (FR); Bontemps, Daniel, F-58000 Nevers (FR); Baume, Hugues, F-58000 Nevers (FR)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 058 438
- EP-A- 0 146 454
- EP-A- 0 428 140

## Beschreibung

Die Erfindung betrifft eine Vorrichtung zur Befestigung eines Schuhes an einem Fahrradpedal gemäß dem Oberbegriff des Patentanspruchs 1.

Eine solche Vorrichtung ist aus der Druckschrift EP-0428140 A1 bekannt. Bei dieser Vorrichtung weisen die beiden Hebel der beiden hinteren Verankerungsorgane jeweils eine eigene Rückstelleinrichtung auf. Eine für eine Seite eingestellte Auslösecharakteristik gilt daher nicht für die andere Seite des Pedalkörpers, so daß stets jeweils zwei Einzelmaßnahmen erforderlich sind, um eine gewünschte Auslösecharakteristik einzustellen. Darüberhinaus ist es schwierig, für beide Pedalseiten eine übereinstimmende Auslösecharakteristik einzustellen.

Bei einer aus der EP 0 146 454 A2 bekannten Vorrichtung sind lediglich auf einer als Trittfläche in Frage kommenden Pedalseite Verankerungsorgane vorgesehen. Soll ein Schuh über dessen Platine somit am betreffenden Pedal befestigt werden, so muß dieses Pedal eine definierte Schwenklage einnehmen, in der die mit den Verankerungsorganen versehene Pedalseite nach oben gekehrt ist.

Ziel der Erfindung ist es, eine weitere Vorrichtung zur Befestigung eines Schuhs an einem Fahrradpedal der eingangs genannten Art zu schaffen. Bei einfachem Aufbau und problemloser Handhabung soll insbesondere erreicht werden, daß der Schuh an beiden Breitseiten des Pedals befestigbar ist, wobei die Auslösecharakteristik unabhängig davon, auf welcher Seite der Schuh befestigt ist, gleich bleiben soll.

Die Aufgabe wird nach der Erfindung durch die im Kennzeichen des Anspruchs 1 angegebenen Merkmale gelöst. Aufgrund der in gleicher Weise auf die beiden, auf unterschiedlichen Breitseiten angeordneten hinteren Verankerungsorgane einwirkenden Rückstelleinrichtung ist sichergestellt, daß in jedem Falle die gewünschte Auslösecharakteristik eingehalten wird bzw. diese Auslösecharakteristik unabhängig davon ist, auf welcher Pedalseite der jeweilige Schuh befestigt wird.

Eine baulich besonders einfache und robuste Ausführung der Rückstelleinrichtung ist im Patentanspruch 2 angegeben. Indem die beiden Kolben durch die dazwischenliegende Druckfeder gegen die beiden, auf unterschiedlichen Breitseiten des Pedals angeordneten hebelartigen hintern Verankerungsorgagehalten sind, ergibt sich unabhängig davon, welcher Kolben über die schuhseitige Platine belastet wurde, bei einer bestimmten Verdrehung der Platine in Auslöserichtung stets auch eine entsprechende Kompression der Feder und damit eine entsprechende Rückstellkraft.

Ist die Rückstellkraft der Rückstelleinrichtung gemäß Anspruch 3 vorzugsweise einstellbar, so wirkt sich eine jeweilige Änderung der Rückstellkraft in der gleichen Weise auf beide Hebel aus. Die Auslösecharakteristik kann somit gleichzeitig für beide Pedalbreitseiten eingestellt werden.

Im Anspruch 4 ist eine praktisch bevorzugte Ausführungsform für eine Rückstelleinrichtung mit einstellbarer Rückstellkraft angegeben.

Gemäß der Ausführungsvariante nach Anspruch 5 sind auch die vorderen Verankerungsorgane entgegen einer durch die Rückstelleinrichtung erzeugten Rückstellkraft jeweils um eine Querachse verschwenkbar, wodurch insbesondere das Einsteigen in das Pedal wesentlich erleichtert wird.

Eine baulich besonders einfache Ausführungsvariante, gemäß der die an einem jeweiligen Ende des Pedalkörpers vorgesehenen hebelartigen vorderen und hinteren Verankerungsorgane zu einem zweiarmigen Hebel zusammengefaßt werden, ist im Anspruch 6 angegeben.

Aufgrund der Ausführungsvariante gemäß Anspruch 7 wird erreicht, daß bei Verwendung ein und derselben Rückstelleinrichtung die Rückstellkraft für die vorderen Verankerungsorgane geringer als die für die hinteren Verankerungsorgane ist, wodurch insbesondere ein solches Einsteigen in das Pedal erleichtert wird, bei dem das hebelartige vordere Verankerungsorgan beim Aufsetzen des Schuhes zunächst nach außen verschwenkt wird und anschließend zur Verankerung des vorderen Abschnitts der Platine wieder zurückschnappt.

Durch die im Anspruch 8 angegebene Ausführungsvariante ist sichergestellt, daß eine Auslösung nur im Verlauf einer relativen Drehung der Platine um eine senkrecht zur betreffenden Breitseite des Pedals verlaufende Hochachse erfolgen kann. Bei mit dem Pedal verankerter Platine ist ein Verschwenken dieser Platine um eine Querachse ausgeschlossen.

Eine baulich besonders einfache alternative Ausführungsvariante, die insbesondere mit einer geringeren Zahl von Anschlägen auskommt, ist im Anspruch 9 angegeben. Indem die vorderen Steuerflächen um einen Winkel gegenüber der Längsrichtung geneigt sind, der kleiner als der betreffende Winkel für die hinteren Steuerflächen ist, wird erreicht, daß bei einer beispielsweise durch eine entsprechende Drehung des Fusses veranlaßte Drehung der Platine der hintere Hebel schneller verschwenkt wird als der vordere Hebel, so daß auch in diesem Falle die Platine hinten ausgelöst wird. Die bisherige Auslösecharakteristik wird beibehalten.

Die Ausführungsvariante gemäß Anspruch 10 unterscheidet sich von der gemäß Anspruch 8 im wesentlichen dadurch, daß anstelle eines hinteren Anschlags nunmehr zwei hintere Anschläge vorgesehen sind und der durch Steuerflächen begrenzte Einschnitt insbesondere nicht mehr am hinteren Verankerungsorgan, sondern an der Platine vorgesehen ist. Dieser Einschnitt bildet eine Aufnahme für einen die komplementären Steuerflächen tragenden Vorsprung des hinteren Verankerungsorgans. Demnach dringt dieses Verankerungsorgan bei einer durch die Feder bedingten Rückstellung mit dem Vorsprung relativ weit in die Platine ein, wodurch der Einstieg insbesondere in solchen Fällen erleichtert ist, in denen die Schuhe mit Schlamm oder Schmutz beaufschlagt sind.

Die Erfindung wird im folgenden anhand von Ausführungsbeispielen unter Bezugnahme auf die Zeichnung näher erläutert; in dieser zeigt:
- Fig. 1: eine schematische, teilweise geschnittene Darstellung eines Fahrradpedals mit aufgesetzter, normalerweise mit der Sohle eines Schuhs verbundener Platine, wobei der Schuh jedoch weggelassen ist,
- Fig. 2: einen Längsschnitt der in Figur 1 gezeigten Anordnung durch die zwischen den beiden endseitigen Hebeln angeordnete Rückstelleinrichtung, wobei die Platine noch nicht eingesetzt ist,
- Fig.3: eine Figur 2 vergleichbare Darstellung, wobei jedoch die Platine bereits teilweise eingesetzt ist,
- Fig. 4: eine um 180° um eine Längsachse gedrehte Darstellung der in Figur 1 gezeigten Anordnung, wobei die nunmehr auf der gegenüberliegenden Breitseite aufgesetzte Platine geringfügig um eine Hochachse verschwenkt ist,
- Fig. 5: einen Längsschnitt durch die zwischen den beiden endseitigen Hebeln angeordnete Rückstelleinrichtung der in Figur 4 gezeigten Anordnung, wobei die Platine vollständig eingesetzt ist,
- Fig. 6: eine Figur 4 vergleichbare Ansicht einer weiteren Ausführungsvariante,
- Fig. 7: eine Seitenansicht sowie eine Draufsicht der im Zusammenhang mit der Ausführungsvariante gemäß den Figuren 1 bis 5 verwendeten Platine, und
- Fig. 8: eine Figur 1 vergleichbare Darstellung einer weiteren Ausführungsform mit zwei hinteren Anschlägen.

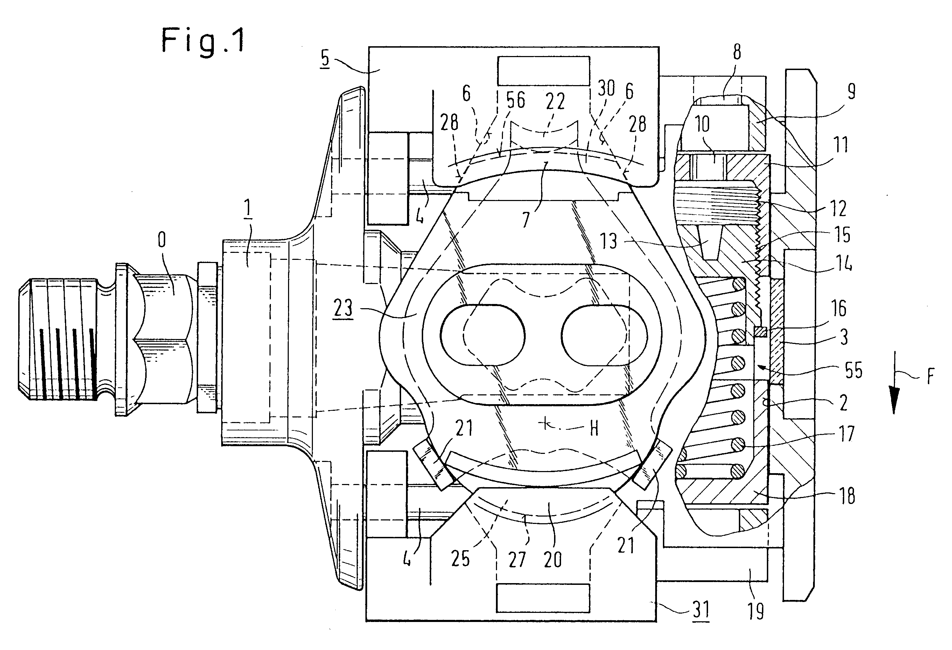

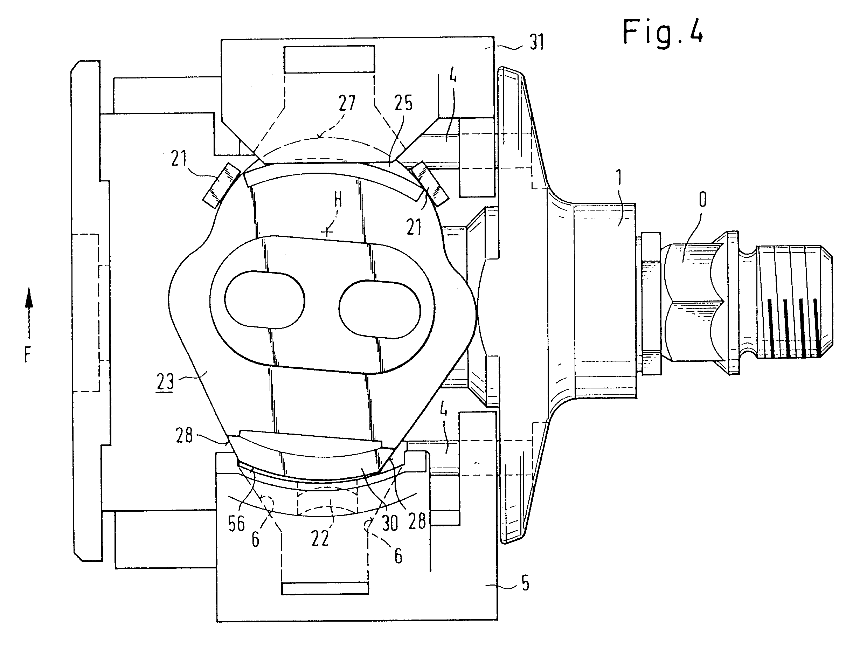

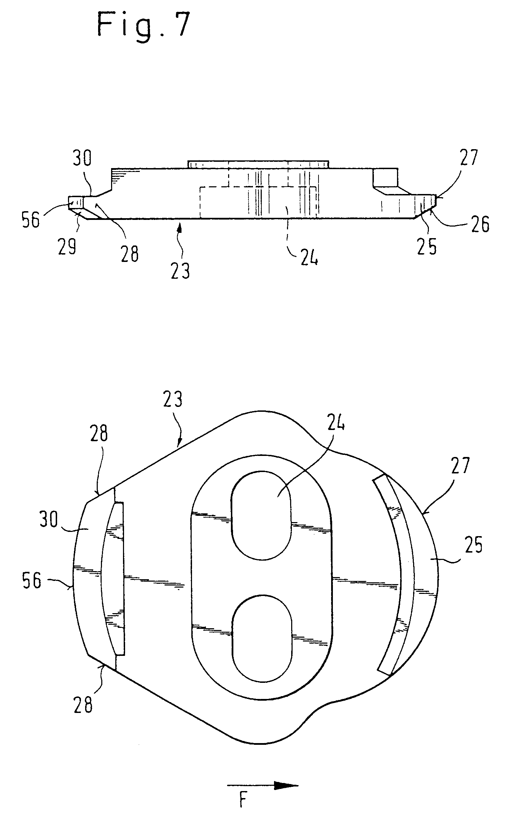

In den Figuren 1 bis 4 und 7 ist ein erstes Ausführungsbeispiel einer Vorrichtung zur Befestigung eines Schuhes an einem Fahrradpedal beschrieben. Hierbei zeigt Figur 7 eine unten an der Sohle eines Schuhes anbringbare Platine 23, über die der Schuh am Pedalkörper 1 befestigbar ist (vgl. z.B. Figuren 1, 3 und 4).

Die Platine 23 umfaßt einen in Fahrtrichtung F betrachtet vorderen Abschnitt 25 mit einer vorderen, kreisförmigen Stützfläche 27 und einer unteren, schrägen Steuerfläche 26 zur Erleichterung des Ansetzens der Platine 24 am Pedalkörper 1 sowie einen in Fahrtrichtung F betrachtet hinteren Abschnitt 30 mit einer gekrümmten hinteren Stützfläche 56 und einer unteren schrägen Steuerfläche 29 zur Erleichterung des Ansetzens der Platine 23 am Pedalkörper 1. Diese Platine 23 kann beispielsweise an den Stellen 24 z.B. über Schrauben und Beilagscheiben am betreffenden Schuh befestigt werden.

Am hinteren Abschnitt 30 der Platine 23 sind seitlich zueinander geneigte ebene Steuerflächen 28 vorgesehen, die nach hinten, d.h. entgegen der Fahrtrichtung F V-förmig zusammenlaufen.

Der Pedalkörper 1 ist mit einer Welle 0 verbunden, über die das Fahrradpedal drehbar an der betreffenden Kurbel des Fahrrades anbringbar ist.

Der vordere Abschnitt 25 der Platine 23 wirkt mit einem in Fahrtrichtung F betrachtet vorderen Verankerungsorgan 31 des Pedalkörpers 1 zusammen. Der hintere Abschnitt 30 der Platine 23 wirkt entsprechend mit einem hinteren Verankerungsorgan 5 des Pedalkörpers 1 zusammen.

Das hintere Verankerungsorgan 5 ist durch einen am oberen Ende hakenartig verlängerten Hebel gebildet, der um eine Querachse 4 schwenkbar am Pedalkörper 1 gelagert ist. In gleicher Weise ist auch das vordere Verankerungsorgan 31 durch einen am oberen Ende hakenförmig verlängerten Hebel gebildet, der wiederum um eine Querachse 4 schwenkbar am Pedalkörper 1 gelagert ist.

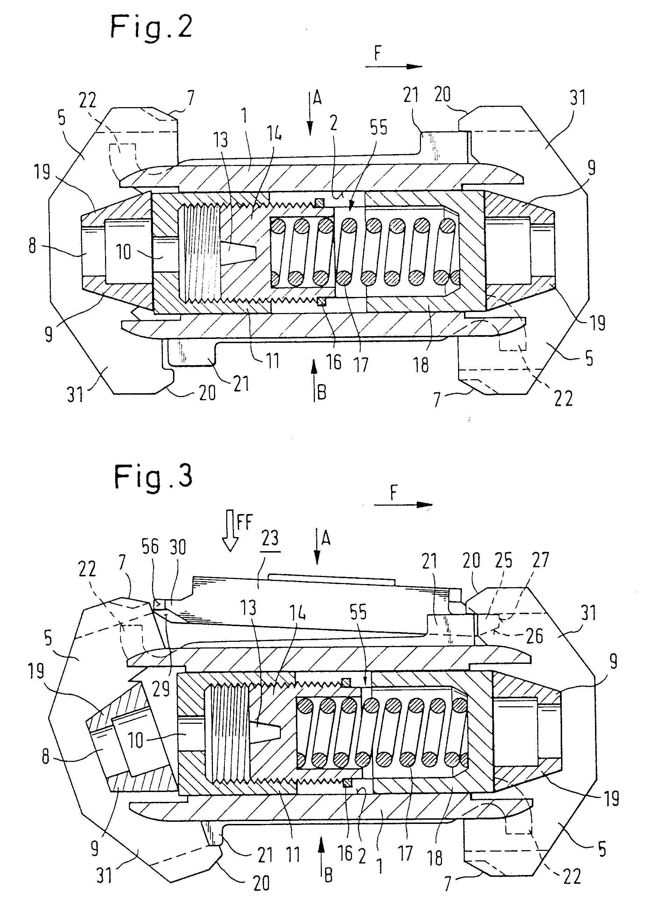

Derartige hebelartige Verankerungsorgane 5, 31 sind nun nicht nur auf der einen, sondern, wie dies beispielsweise anhand von Figur 2 und 3 zu sehen ist, auf beiden, jeweils als Trittfläche dienenden Breitseiten A, B des Pedalkörpers 1 vorgesehen. Dabei liegen sich die auf unterschiedlichen Breitseiten A, B vorgesehenen vorderen Verankerungsorgane 31 einerseits und hinteren Verankerungsorgane 5 andererseits jeweils diagonal gegenüber. Als hinteres Verankerungsorgan wird hierbei jeweils das Verankerungsorgan betrachtet, das mit der Platine 23 in Eingriff tritt und gleichzeitig in Fahrtrichtung betrachtet hinten liegt. Entsprechend soll unter vorderen Verankerungsorganen verstanden werden, daß diese Organe dann, wenn sie mit der Platine 23 in Eingriff treten, in Fahrtrichtung betrachtet vorne liegen.

Wie am besten anhand von Figuren 2 und 3 zu erkennen ist, sind die an einem jeweiligen Ende des Pedalkörpers 1 angeordneten, auf unterschiedlichen Breitseiten A, B vorgesehenen vorderen und hinteren Verankerungsorgane 31, 5 jeweils durch einen gemeinsamen, oben und unten jeweils hakenartig verlängerten zweiarmigen Hebel 5, 31 gebildet, der um die jeweilige Querachse 4 (vgl. Figur 1) schwenkbar am Grundkörper 1 gelagert ist.

Die beiden doppelarmigen Hebel 5, 31 und 31, 5 sind jeweils mit zwei Nocken 9, 19 verbunden, wobei der Nocken 9 dem hinteren, durch einen betreffenden Hebelabschnitt gebildeten Verankerungsorgan 5 und der Nocken 19 dem ebenfalls durch einen Hebelabschnitt gebildeten vorderen Verankerungsorgan zugeordnet ist. Diese seitlich von den Verankerungsorganen 5, 31 herausstehenden Nocken, 9, 19 sind von einer zwischen diesen angeordneten Rückstelleinrichtung 55 beaufschlagt (vgl. insbesondere Figuren 1 bis 3).

Diese zwischen den beiden doppelarmigen Hebeln 5, 31 wirkende Rückstelleinrichtung 55 umfaßt zwei in einer Bohrung 2 des Pedalkörpers 1 geführte Kolben 11, 18 sowie eine zwischen diesen Kolben 11, 18 angeordnete Druckfeder 17. Durch diese Druckfeder 17 ist der Kolben 11 gegen die Nocken 9, 19 des am einen Ende vorgesehenen doppelarmigen Hebels 5, 31 gehalten, während der andere Kolben 18 entsprechend gegen die Nocken 9, 19 des am anderen Ende des Pedalkörpers 1 vorgesehenen doppelarmigen Hebels 5, 31 gehalten ist (vgl. beispielsweise Figur 2).

Die durch diese Rückstelleinrichtung 55 aufgebrachte Rückstellkraft ist über eine mit dem Kolben 11 verbundene, das betreffende Ende der Druckfeder 17 abstützende Stellschraube 14 einstellbar. Hierzu weist der topfartige Kolben 11 ein Innengewinde 12 und die Stellschraube 14 ein Außengewinde 15 auf, so daß die zur Aufnahme des betreffenden Federendes ebenfalls topfartig ausgebildete Stellschraube 14 teleskopartig in den Kolben 11 einschraubbar bzw. aus diesem herausschraubbar ist.

Außen an der Einstellschraube 14 ist ein Zeigerelement 16 angeordnet, das durch ein mit einer Gradeinteilung versehenes Fenster 3 hindurch von außen sichtbar ist und damit die jeweils eingestellte Rückstellkraft anzeigt.

Außen im Kopf der topfartigen Einstellschraube 14 ist ein Schlitz 13 zur Aufnahme der Spitze eines Schraubendrehers vorgesehen, durch den die Stellschraube 14 durch eine Durchgangsöffnung 10 im Kopf des ebenfalls topfartigen Kolbens 11 sowie eine Durchgangsöffnung 8 im Pedalkörper 1 hindurch verstellbar ist.

Auf beiden Breitseiten A, B des Pedalkörpers 1 sind jeweils zwei in Fahrtrichtung F betrachtet vordere Anschläge 21 vorgesehen, die mit der teilkreisförmigen vorderen Stützfläche 27 der Platine 23 zusammenwirken.

Ferner ist auf jeder Breitseite A, B des Pedalkörpers jeweils ein in Fahrtrichtung F betrachtet hinterer Anschlag 22 vorgesehen, der mit der gekrümmten hinteren Stützfläche 56 der Platine 23 zusammenwirkt.

Ferner wirken die beiden zueinander geneigten, ebenen Steuerflächen 28 am hinteren Abschnitt 30 der Platine 23 mit entsprechend geneigten Steuerflächen 6 des hinteren Verankerungsorgans 5 zusammen.

Wird somit die Platine 23 relativ zum Pedalkörper 1 um eine durch die teilkreisförmige vordere Stützfläche 27 definierte Hochachse H gedreht, so werden die Stützflächen 28 der Platine 23 entlang der Stützflächen 6 des hebelartigen hinteren Verankerungsorgans 5 bewegt, wobei dieses entgegen der von der Rückstelleinrichtung 55 aufgebrachten Rückstellkraft um die Schwenkachse 4 verschwenkt wird.

Wie insbesondere in den Figuren 1 und 2 zu erkennen ist, sind die hebelartigen, hakenartig verlängerten Verankerungsorgane 5, 31 am oberen Ende der jeweiligen hakenartigen Verlängerung mit einer schrägen Steuerfläche 30 bzw. 20 versehen, durch die das Aufsetzen der Platine 23 unter gleichzeitigem Verschwenken der betreffenden Hebel nach hinten erleichtert wird.

Während die vorderen Anschläge 21 seitlich am vorderen Verankerungsorgan 31 angeordnet sind, liegt der hintere Anschlag 22 unterhalb der hakenartigen Verlängerung des betreffenden hinteren, hebelartigen Verankerungsorgans 5.

Die Funktionsweise dieser anhand der Figuren 1 bis 4 und 7 beschriebenen Ausführungsvariante ist wie folgt:
Die beiden identischen, zweckmäßigerweise aus verschleißfreiem Material hergestellten vorderen Anschläge 21 sowie der hintere Anschlag 22 legen die Platine 23 in Längsrichtung fest. Durch hakenartigen Fortsätze der jeweils durch einen Hebel gebildeten Verankerungsorgane wird die Platine 23 gegen die betreffende Breitseite A, B gehalten. Hierbei sind die Eingriffsflächen derart ausgelegt und angeordnet, daß bei einer jeweiligen Zugbelastung der betreffende Hebel nicht verschwenkt wird.

Der Schuh kann über die an seiner Sohle befestigte Platine nach Belieben mit der einen oder der anderen Breitseite des Fahrradpedales automatisch verbunden werden. Es gibt beispielsweise die folgenden zwei Möglichkeiten des Aufsetzens des Schuhes bzw. der Platine auf das Pedal:
So kann gemäß Figur 3 beispielsweise durch eine Vorwärtsbewegung des Fusses erreicht werden, daß sich die vordere Nase bzw. der vordere Abschnitt in den Bereich unterhalb des vorderen Hebels hineinerstreckt, bis die vordere teilkreisförmige Stützfläche 27 der Platine an den vorderen Anschlägen 21 zur Anlage kommt.

Dieselben vorderen Anschläge 21 dienen auch dazu, die Platine bis zum Erreichen der Sollposition zu führen. Ist die Platine beispielsweise nicht genau mit der Längsachse des Pedals ausgerichtet, so sorgen die Anschläge 21 sowie die vordere Stützfläche 27 der Platine dafür, daß diese wieder inLängsrichtung zentriert wird.

Wird anschließend eine Kraft FF in Richtung zum Boden hin ausgeübt, so kommt die Platine in Eingriff mit dem hebelartigen hinteren Verankerungsorgan 5, wobei die Steuerflächen 29 und 7 dafür sorgen, daß der linke Hebel nach links verschwenkt wird (vgl. Figur 3). Hierbei tritt die äußere Kante des betreffenden Nockens in Eingriff mit dem Kolben 11 der Rückstelleinrichtung 55, wodurch die Feder 17 komprimiert und eine entsprechende Rückstellkraft erzeugt wird.

Nachdem die Steuerfläche 29 der Platine 23 die Steuerfläche 7 des hebelartigen Verankerungsorgans 5 vollständig überstrichen hat, nimmt die Platine ihre Sollage ein, wonach das hebelartige hintere Verankerungsorgan 5 unter Einwirkung der Feder 17 zurückschnappt und die Platine gegen die betreffende Breitseite A hält.

Darüberhinaus wirken während dieser Schließbewegung die Steuerflächen 6 des hinteren Hebels mit den Steuerflächen 28 der Platine zusammen, wodurch eine optimale Zentrierung der Platine bezüglich des Pedales erreicht wird.

Eine andere Art des Einstiegs in das Pedal bzw. des Ansetzens der Platine am Pedal besteht darin, daß die Platine vertikal über das Pedal geführt und durch eine leichte Bewegung in Längsrichtung nach hinten der hintere Abschnitt der Platine unter den hinteren Hebel bzw. das hintere Verankerungsorgan 5 verbracht wird, und zwar bis zur Anlage am hinteren Anschlag 22.

Anschließend wird der vordere Abschnitt der Platine zum Boden hin gedrückt, wobei infolge der Steuerfläche 26 an der Platine sowie der Steuerfläche 20 am vorderen Hebel bzw. vorderen Verankerungsorgan 31 das Zurückschwenken des Hebels erleichtert wird.

Bei fest im Pedal verankerter Platine werden die nach vorne gerichteten Kräfte durch die vorderen Anschläge 21, die nach hinten gerichteten Kräfte durch den hinteren Anschlag 22 und die im Sinne einer vertikalen Mitnahme wirkenden Reibungskräfte durch die hinteren und vorderen Nasen 25 und 30 der Platine sowie durch die vorderen und hinteren Hebel aufgenommen.

Bei in Richtung der Drehachse 0 wirkenden Kräften wird infolge der vorderen Anschläge 21 und der Stützfläche 27 eine Drehung der Platine bewirkt, durch die infolge der Steuerflächen 28 der Platine sowie der Steuerflächen 6 des hinteren Hebels dieser um seine Achse 4 verschwenkt wird. Über den diesem hinteren Hebel 5 zugeordneten Nocken 9 wird die Druckfeder 17 über den Kolben 11 und die Stellschraube 14 komprimiert. Demgemäß wird eine Rückstellkraft erzeugt, die in Richtung der Drehachse 0 wirkenden Kräften entgegenwirkt.

Bei geringen Kräften erfolgt keinerlei Verlagerung des Hebels. Bei stärkeren Kräften wird der Hebel entgegen der Federkraft soweit verschwenkt, daß die Platine ausgelöst wird und der Schuh damit freigegeben ist.

Über die Stellschraube 14 kann die Rückstellkraft so eingestellt werden, daß ein unerwünschtes Auslösen ausgeschlossen ist.

Zum Aussteigen aus dem Pedal wird der Fuß und damit die Platine nach außen oder nach innen verdreht.

Unter Einwirkung des Fusses dreht sich die Platine um die durch die teilkreisförmige Stützfläche bestimmte Hochachse H (vgl. Figur 1). Die mit den Steuerflächen 6 des hinteren Hebels zusammenwirkenden Steuerflächen 28 der Platine bewirken zudem ein Verschwenken des Hebels 5 um dessen Querachse 4. Hierbei tritt der Nocken 9 dieses Hebels in Eingriff mit dem Kolben 11, durch den wiederum über die Stellschraube 15 die Druckfeder 17 komprimiert wird.

Der Fahrradfahrer muß somit ein genügend hohes Drehmoment aufbringen, um für eine Kompression der Druckfeder 17 zu sorgen, und zwar in dem Maße, daß die hinteren Steuerflächen 28 der Platine vollkommen frei von den Steuerflächen 6 des hinteren Hebels kommen. Ab diesem Moment ist die Platine und damit der Schuh vollkommen freigegeben.

Sollte im Verlauf dieses Auslösens eine Kraftkomponente in Längsrichtung nach hinten auftreten, so wird diese vom hinteren Anschlag 22 aufgenommen.

Die Auslösecharakteristik ist entsprechend wiederum über die Stellschraube 14 der Rückstelleinrichtung 55 einstellbar. Die Einstellung erfolgt jeweils gleichzeitig und gemeinsam für beide als Trittfläche in Frage kommenden Breitseiten des Pedals.

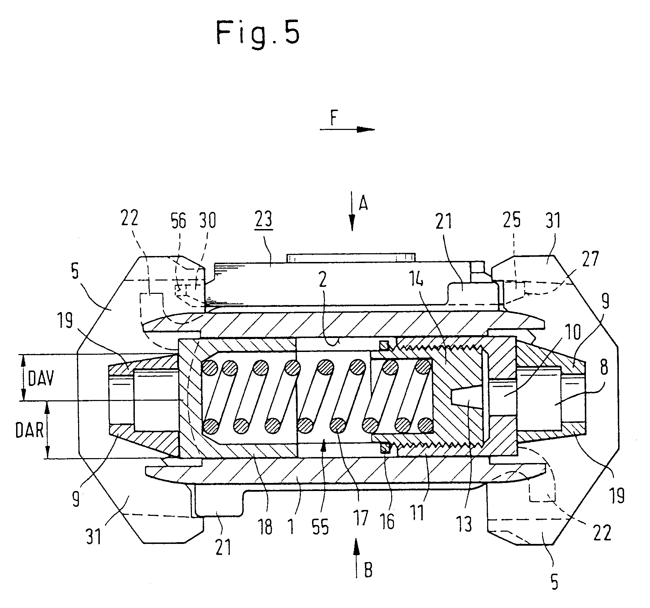

Das in Figur 5 gezeigte Ausführungsbeispiel einer Vorrichtung zum Befestigen eines Schuhes an einem Fahrradpedal unterscheidet sich von dem zuvor beschriebenen Ausführungsbeispiel dadurch, daß die vorderen und hinteren Verankerungsorgane 31, 5 bzw. die diese bildenden vorderen und hinteren Hebel über Nocken 19, 9 unterschiedlichen Profils beaufschlagt sind. Wie der Figur 5 entnommen werden kann, sind die Profile dieser Nocken 19, 9 derart unterschiedlich gewählt, daß sich bei einem Eingriff der Rückstelleinrichtung 55 am dem vorderen Verankerungsorgan 31 zugeordneten Nocken 19 ein Hebelarm DAV ergibt, der kürzer ist als der Hebelarm DAR im Falle eines Eingriffs der Rückstelleinrichtung 55 am dem hinteren Verankerungsorgan 5 zugeordneten Nocken 9. Maßgeblich ist hierbei die äußere Kante der Nocken, mit denen der betreffende Kolben 18 bzw. 11 in Eingriff tritt (vgl. auch Figur 3).

Durch die verschiedenen Profile der Nocken 19, 9 wird somit erreicht, daß bei Verwendung ein und derselben Rückstelleinrichtung die Rückstellkraft für die vorderen Verankerungsorgane geringer als die für die hinteren Verankerungsorgane ist. Hierdurch wird insbesondere ein solches Einsteigen in das Pedal erleichtert, bei dem der vordere Verankerungshebel beim Aufsetzen des Schuhes zunächst nach außen verschwenkt wird, bevor er zur Verankerung der Platine wieder zurückschnappt.

Wesentlich ist hierbei, daß die jeweilige Auslösecharakteristik bzw. das zum Auslösen aufzubringende Moment in keiner Weise beeinflußt wird.

Abgesehen von den unterschiedlichen Nockenprofilen ist diese Ausführungsvariante mit der zuvor beschriebenen vergleichbar. Einander entsprechenden Teilen sind somit gleiche Bezugszeichen zugeordnet.

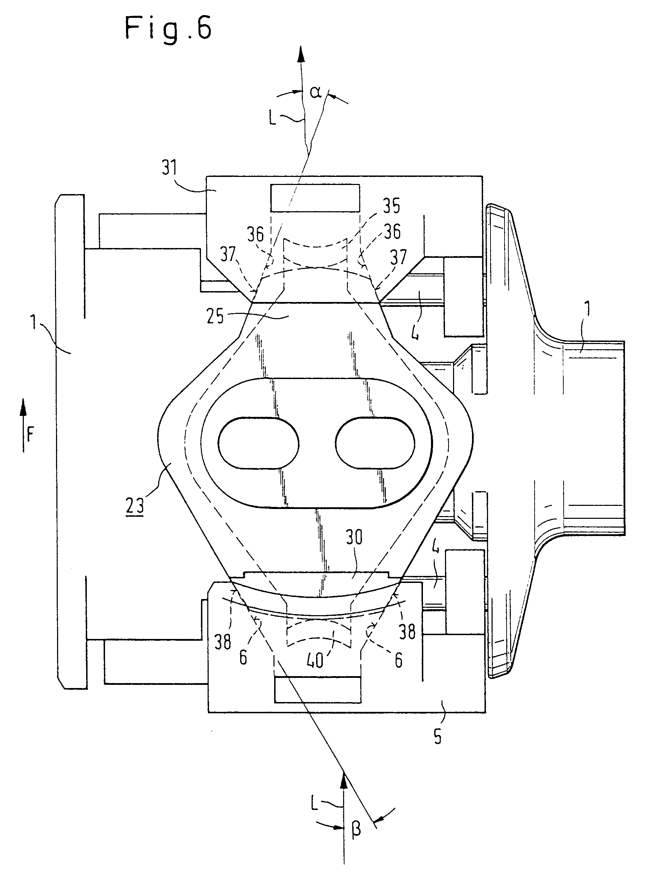

Beim in Figur 6 gezeigten Ausführungsbeispiel weisen sowohl der vordere als auch der hintere Abschnitt 25, 30 der am Pedalkörper 1 zu befestigenden Platine 23 jeweils zwei zueinander geneigte ebene Steuerflächen 37, 38 auf. Diese Steuerflächen 37, 38 der Platine 23 wirken mit entsprechend geneigten Steuerflächen 36, 6 des vorderen bzw. hinteren hebelartigen Verankerungsorgans 31, 5 zusammen.

Der hintere Abschnitt 30 der Platine 23 sowie der hintere Hebel 5 sind somit gleich wie beim anhand von Figur 1 bis 4 und 7 beschriebenen Ausführungsbeispiel ausgebildet. Es ist auch wiederum ein hinterer Anschlag 40 vorgesehen.

Anders als zuvor besitzen jedoch der vordere Abschnitt 25 der Platine 23 sowie der vordere Hebel 31 eine Gestalt ähnlich der Anordnung im hinteren Bereich. Entsprechend ist nur ein einziger vorderer Anschlag 35 vorgesehen.

Die vorderen und hinteren Bereiche unterscheiden sich nun aber dadurch, daß die vorderen Steuerflächen 37, 36 um einen Winkel α gegenüber der Längsrichtung L geneigt sind, der kleiner als der betreffende Winkel β für die hinteren Steuerflächen 38, 6 ist.

Dadurch wird erreicht, daß bei einer beispielsweise durch eine entsprechende Drehung des Fusses veranlaßte Drehung der Platine 23 der hintere Hebel 5 schneller um seine Querachse 4 verschwenkt wird als der vordere Hebel 31. Die Platine wird somit auch in diesem Falle hinten ausgelöst. Die bisherige Auslösecharakteristik wird beibehalten.

Diese Ausführungsvariante zeichnet sich durch ihre besonders einfache Bauart aus, wobei auch vorne nur ein einziger Anschlag 35 vorgesehen ist, der in der gleichen Weise wie der hintere Anschlag 40 ausgebildet sein kann. Wie durch gestrichelte Linien dargestellt, können die beiden Anschläge an einem einstückigen Teil abgebogen sein. Dies trifft auch auf die anderen Ausführungsvarianten zu.

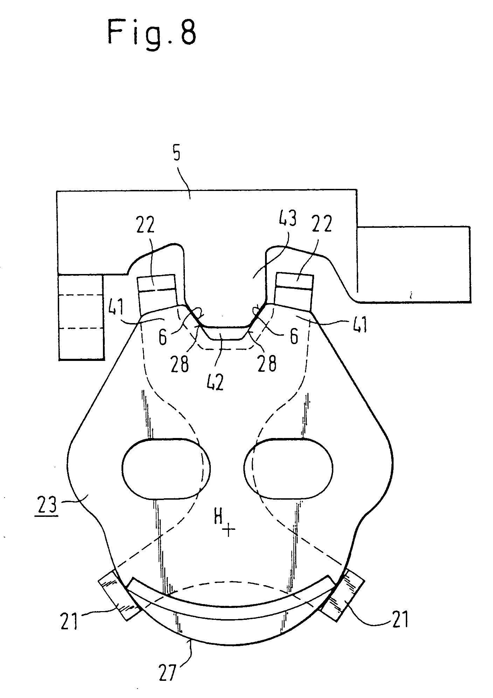

Eine weitere, insbesondere den Einstieg bei stark verschmutzten oder mit Schlamm beaufschlagten Schuhen erleichternde Ausführungsvariante ist in Figur 8 gezeigt.

Hierbei sind wiederum auf beiden Breitseiten A, B des Pedalkörpers 1 jeweils wenigstens zwei mit einer teilkreisförmigen vorderen Stützfläche 27 der Platine 23 zusammenwirkende vordere Anschläge 21 vorgesehen. Insoweit stimmt diese Ausführungsform noch mit der gemäß Figur 1 und 7 überein.

Abweichend von der zuvor beschriebenen Variante sind auf den beiden Breitseiten A, B jedoch jeweils zwei mit jeweils einem zweier V-förmig angeordneter hinterer Vorsprünge 41 der Platine 23 zusammenwirkende hintere Anschläge 22 vorgesehen. Der sich zwischen den beiden hinteren Vorsprüngen 41 ergebende Einschnitt 42 ist seitlich durch zwei zueinander geneigte, nach hinten V-förmig auseinanderlaufende Steuerflächen 28 der Platine 23 begrenzt. Diese platinenseitigen Steuerflächen 28 wirken mit entsprechend geneigten Steuerflächen 6 des hinteren Verankerungsorgans 5 zusammen, die außen an einem in den Einschnitt 42 ragenden Vorsprung 43 des hinteren Hebels 5 vorgesehen sind.

Hierbei dringt das hintere Verankerungsorgan bei einer Rückstellung durch die Feder über den Vorsprung 43 relativ weit in die in der Platine 23 gebildete Ausnehmung 42 ein, was den Einstieg insbesondere bei stark verschmutzten Schuhen wesentlich erleichtert.

## Patentansprüche

1. Vorrichtung zur Befestigung eines Schuhes an einem Fahrrad mit einem Pedalkörper (1) und mit einer an der Schuhsohle anbringbaren Platine (23), deren in Fahrtrichtung betrachtet vorderer Abschnitt (25) mit einem vorderen Verankerungsorgan (31) und deren in Fahrtrichtung betrachtet hinterer Abschnitt (30) mit einem hinteren Verankerungsorgan (5) des Pedalkörpers (1) zusammenwirkt, wobei das hintere Verankerungsorgan (5) einen um eine Querachse (4) schwenkbaren Hebel (5) umfaßt, der durch eine Rückstelleinrichtung (55) in seine Verankerungsstellung vorgespannt ist, und wobei auf beiden jeweils als Trittfläche dienenden Breitseiten (A, B) des Pedalkörpers (1) jeweils ein Paar aus einem vorderen Verankerungsorgan (31) und einem hinteren Verankerungsorgan (5) vorgesehen ist,
dadurch **gekennzeichnet,**
daß eine gemeinsame Rückstelleinrichtung (55) für beide Hebel (5) der beiden hinteren Verankerungsorgane vorgesehen ist, die zwischen den beiden Hebeln (5) angeordnet ist.

2. Vorrichtung nach Anspruch 1,
dadurch **gekennzeichnet,**
daß die Rückstelleinrichtung (55) zwei im Pedalkörper (1) geführte, jeweils einen der beiden Hebel (5) der beiden hinteren Verankerungsorgane beaufschlagende Kolben (11, 18) sowie eine zwischen diesen Kolben (11, 18) angeordnete Druckfeder (17) umfaßt.

3. Vorrichtung nach Anspruch 1 oder 2,
dadurch **gekennzeichnet,**
daß die Rückstellkraft der Rückstelleinrichtung (55) einstellbar ist.

4. Vorrichtung nach Anspruch 2 und 3,
dadurch **gekennzeichnet,**
daß die Rückstelleinrichtung (55) über eine mit einem (11) der beiden Kolben (11, 18) verbundene, das betreffende Ende der Druckfeder (17) abstützende Stellschraube (14) eingestellbar ist.

5. Vorrichtung nach einem der vorhergehenden Ansprüche,
dadurch **gekennzeichnet,**
daß auch die vorderen Verankerungsorgane jeweils einen um eine Querachse (4) schwenkbar am Pedalkörper (1) angebrachten, durch die Rückstelleinrichtung (55) in seine Verankerungsstellung vorgespannte Hebel (31) umfassen.

6. Vorrichtung nach Anspruch 5,
dadurch **gekennzeichnet,**
daß den an einem jeweilgen Ende des Pedalkörpers (1) angeordneten, auf unterschiedlichen Breitseiten (A, B) vorgesehenen vorderen und hinteren Verankerungsorganen (31, 5) jeweils ein gemeinsamer, vorzugsweise zweiarmiger Hebel (5, 31) zugeordnet ist.

7. Vorrichtung nach einem der vorhergehenden Ansprüche,
dadurch **gekennzeichnet,**
daß die vorderen und hinteren Verankerungsorgane (31, 5) bzw. die diese bildenden vorderen und hinteren Hebel (31, 5) über Nocken (19, 9) unterschiedlichen Profils beaufschlagt sind, wobei diese Profile vorzugsweise derart unterschiedlich gewählt sind, daß sich bezüglich des Eingriffs der Rückstelleinrichtung (55) an dem vorderen Verankerungsorgan (31) zugeordneten Nocken (19) der relativ kürzere Hebelarm (DAV) ergibt.

8. Vorrichtung nach einem der vorhergehenden Ansprüche,
dadurch **gekennzeichnet,**
daß auf beiden Breitseiten (A, B) des Pedalkörpers (1) jeweils wenigstens zwei mit einer teilkreisförmigen vorderen Stützfläche (27) der Platine (23) zusammenwirkende vordere Anschläge (21) sowie ein mit einer gekrümmten hinteren Stützfläche (56) der Platine (23) zusammenwirkender hinterer Anschlag (22) vorgesehen sind und daß vorzugsweise der hintere Abschnitt (30) der Platine (23) zwei zueinander geneigte Steuerflächen (28) aufweist, die mit entsprechend geneigten Steuerflächen (6) des hinteren Verankerungsorgans (5) zusammenwirken, um dieses bei einer relativen Drehung der Platine (23) um eine durch die teilkreisförmige vordere Stützfläche (27) definierte Hochachse (H) entgegen der Rückstellkraft zu verschwenken.

9. Vorrichtung nach einem der Ansprüche 1 bis 7,
dadurch **gekennzeichnet,**
daß sowohl der vordere als auch der hintere Abschnitt (25, 30) der Platine (23) jeweils zwei zueinander geneigte Steuerflächen (37, 38) aufweist, die mit entsprechend geneigten Steuerflächen (36, 6) des vorderen bzw. hinteren hebelartigen Verankerungsorgans (31, 5) Zusammenwirken, und daß die vorderen Steuerflächen (37, 36) um einen Winkel (α) gegenüber der Längsrichtung (L) geneigt sind, der kleiner als der betreffende Winkel (β) für die hinteren Steuerflächen (38, 6) ist.

10. Vorrichtung nach einem der Ansprüche 1 bis 7,
dadurch **gekennzeichnet,**
daß auf beiden Breitseiten (A, B) des Pedalkörpers (1) jeweils wenigstens zwei mit einer teilkreisförmigen vorderen Stützfläche (27) der Platine (23) zusammenwirkende vordere Anschläge (21) sowie zwei mit jeweils einem zweier V-förmig angeordneter hinterer Vorsprünge (41) der Platine (23) zusammenwirkende hintere Anschläge (22) vorgesehen sind, und daß der sich zwischen den beiden hinteren Vorsprüngen (41) ergebende Einschnitt (42) seitlich durch zwei zueinander geneigte, nach hinten V-förmig auseinanderlaufende Steuerflächen (28) der Platine (23) begrenzt ist, die mit entsprechend geneigten Steuerflächen (6) des hinteren Verankerungsorgans (5) zusammenwirken, die außen an einem in den Einschnitt (42) ragenden Vorsprung (43) des hinteren Verankerungsorgans (5) vorgesehen sind.

## Claims

1. Apparatus for securing a shoe to a bicycle comprising a pedal body (1) and a plate (23) which can be mounted onto the sole of the shoe, with the front section (25) of the plate when considered in the direction of travel cooperating with a front anchoring member (31) and with the rear section (30) of the plate when considered in the direction of travel cooperating with a rear anchoring member (5) of the pedal body (1), wherein the rear anchoring member (5) includes a lever (5) pivotable about a transverse axis (4), with the lever being biased by a resetting device (55) into its anchoring position, and wherein on the two broad sides (A, B) of the pedal body (1), which respectively serve as a pedal surface, there is in each case provided a pair comprising a front anchoring member (31) and a rear anchoring member (5), characterised in that a joint resetting device (55) is provided for both levers (5) of the two rear anchoring members and is arranged between the two levers (5).

2. Apparatus in accordance with claim 1, characterised in that the resetting device (55) includes two pistons (11, 18) which are guided in the pedal body (1) and which respectively act on one of the two levers (5) of the two rear anchoring members, and also a compression spring (17) arranged between these pistons (11, 18).

3. Apparatus in accordance with claim 1 or claim 2, characterised in that the resetting force of the resetting device (55) is adjustable.

4. Apparatus in accordance with claim 2 and claim 3, characterised in that the resetting device (55) is adjustable via a positioning screw (14) connected to one (11) of the two pistons (11, 18) which supports the relevant end of the compression spring (17).

5. Apparatus in accordance with one of the preceding claims, characterised in that the front anchoring members also each include a lever (31) which is pivotally mounted on the pedal body (1) about a transverse axis (4) and is biased by the resetting means (55) into its anchoring position.

6. Apparatus in accordance with claim 5, characterised in that in each case a common, preferably two-armed lever (5, 31),is associated with the front and rear anchoring members (31, 5) arranged at a respective end of the pedal body (1) at different broad sides (A, B).

7. Apparatus in accordance with one of the preceding claims, characterised in that the front and rear anchoring members (31, 5) or the front and rear levers (31, 5) forming the same are acted on via cams (19, 9) of different profiles, with these profiles being preferably differently selected in such a way that the relatively shorter lever arm (DAV) results with respect to the engagement of the resetting means (55) on the cam (19) associated with the front anchoring member (31).

8. Apparatus in accordance with one of the preceding claims, characterised in that on the two broad sides (A, B) of the pedal body (1) there are respectively provided at least two front abutments (21) cooperating with a part-circular front support surface (27) of the plate (23) and also a rear abutment (22) which cooperates with a curved rear support surface (56) of the plate (23); and in that the rear section (30) of the plate (23) preferably has two mutually inclined control surfaces (28) which cooperate with correspondingly inclined control surfaces (6) of the rear anchoring member (5) in order to pivot the latter against the resetting force on a relative rotation of the plate (23) about a vertical axis (H) defined by the part-circular front support surface (27).

9. Apparatus in accordance with one of the claims 1 to 7, characterised in that both the front section (25) and also the rear section (30) of the plate (23) in each case have two mutually inclined control surfaces (37, 38) which cooperate with correspondingly inclined control surfaces (36, 6) of the front and rear lever-like anchoring members (31, 5) respectively; and in that the front control surfaces (37, 36) are inclined by an angle α relative to the longitudinal direction (L) which is smaller than the relevant angle β for the rear control surfaces (38, 6).

10. Apparatus in accordance with one of the claims 1 to 7, characterised in that on the two broad sides (A, B) of the pedal body (1) there are respectively provided at least two front abutments (21) which cooperate with a part-circular front support surface (27) of the plate (23) and also two rear abutments (22) which respectively cooperate with one of two V-shaped, rear projections (41) of the plate (23); and in that the notch (42) resulting between the two rear projections (41) is bounded at the sides by two mutually inclined control surfaces (28) of the plate (23) which diverge rearwardly in V-shaped manner and which cooperate with correspondingly inclined control surfaces (6) of the rear anchoring member (5) which are provided outwardly on a projection (43) of the rear anchoring member (5) projecting into the notch (42).

## Revendications

1. Dispositif de fixation d'une chaussure sur une bicyclette comportant un corps de pédale (1) et une platine (23) susceptible d'être montée sur une semelle de chaussure, le tronçon antérieur (25) de ladite platine, vu en direction de roulement, coopérant avec un organe d'ancrage (31) antérieur et le tronçon postérieur (30) de ladite platine, vu en direction de roulement, coopérant avec un organe d'ancrage postérieur (5) du corps de pédale (1), dans lequel l'organe d'ancrage postérieur (5) comprend un levier (5) pivotant autour d'un axe transversal (4), qui est précontraint grâce à un dispositif de rappel (55) dans sa position d'ancrage, et il est prévu sur chacun des deux côtés larges (A, B) du corps de pédale (1) qui servent de surface de pose du pied, une paire constituée par un organe d'ancrage (31) antérieur et un organe d'ancrage (5) postérieur, caractérisé en ce qu'il est prévu pour les deux leviers (5) des deux organes d'ancrage postérieurs un dispositif de rappel (55) commun agencé entre les deux leviers (5).

2. Dispositif selon la revendication 1, caractérisé en ce que le dispositif de rappel (55) comprend deux pistons (11, 18) guidés dans le corps de pédale (1), sollicitant chacun un des deux leviers (5) des deux organes d'ancrage postérieurs ainsi qu'un ressort de compression (17) agencé entre ces pistons (11, 18).

3. Dispositif selon l'une ou l'autre des revendications 1 et 2, caractérisé en ce que la force de rappel du dispositif de rappel (55) est réglable.

4. Dispositif selon les revendications 2 et 3, caractérisé en ce que le dispositif de rappel (55) est réglable par l'intermédiaire d'une vis de réglage (14) reliée à l'un (11) des deux pistons (11, 18) et soutenant l'extrémité correspondante du ressort de compression (17).

5. Dispositif selon l'une quelconque des revendications précédentes, caractérisé en ce que les organes d'ancrage antérieurs comprennent aussi un levier (31) respectif monté sur le corps de pédale (1), en pivotement autour d'un axe transversal (4), et précontraint par le dispositif de rappel (55) dans sa position d'ancrage.

6. Dispositif selon la revendication 5, caractérisé en ce qu'un levier (5, 31) commun, de préférence à deux bras, est associé à chacun des organes d'ancrage (31, 5) antérieur et postérieur prévus sur des côtés larges (A, B) différents, sur une extrémité respective du corps de pédale (1).

7. Dispositif selon l'une quelconque des revendications précédentes, caractérisé en ce que les organes d'ancrage (31, 5) antérieur et postérieur, ou les leviers antérieur et postérieur (31, 5) formant ceux-ci, sont sollicités par des cames (19, 9) de profils différents qui sont choisis de telle façon qu'il en résulte un bras de levier (DAV) relativement plus petit en ce qui concerne le point d'attaque du dispositif de rappel (55) sur la came (19) associée à l'organe d'ancrage (31) antérieur.

8. Dispositif selon l'une quelconque des revendications précédentes, caractérisé en ce qu'il est prévu sur les deux côtés larges (A, B) du corps de pédale (1) respectivement au moins deux butées (21) antérieures coopérant avec une surface d'appui (27) antérieure semi-circulaire de la platine (23) ainsi qu'une butée (22) postérieure coopérant avec une surface d'appui (56) postérieure courbe de la platine (23) et en ce que de préférence, le tronçon postérieur (30) de la platine (23) présente deux surfaces de commande (28) inclinées l'une vers l'autre qui coopèrent avec des surfaces de commande (6) inclinées de manière correspondante de l'organe d'ancrage (5) postérieur pour pivoter celui-ci à l'encontre de la force de rappel lors d'une rotation relative de la platine (23) autour d'un axe vertical (H) défini par la surface d'appui (27) antérieure semi-circulaire.

9. Dispositif selon l'une quelconque des revendications 1 à 7, caractérisé en ce que non seulement le tronçon antérieur, mais aussi le tronçon postérieur (25, 30) de la platine (23) présente respectivement deux surfaces de commande (37, 38) inclinées l'une vers l'autre, qui coopèrent avec des surfaces de commande (36, 6) inclinées de manière correspondante des organes d'ancrage (31, 5) antérieur et postérieur en forme de levier, et en ce que les surfaces de commande antérieures (37, 36) sont inclinées par rapport à la direction longitudinale (L) d'un angle (α) qui est plus petit que l'angle correspondant (β) pour les surfaces de commande (38, 6) postérieures.

10. Dispositif selon l'une quelconque des revendications 1 à 7, caractérisé en ce que sur deux côtés larges (A, B) du corps de pédale (1), il est prévu respectivement au moins deux butées (21) antérieures coopérant avec une surface d'appui (27) antérieure semi-circulaire de la platine (23) ainsi que deux butées (22) postérieures coopérant avec respectivement l'une de deux saillies (41) postérieures agencées en forme de V sur la platine (23), et en ce que la découpe (42) qui se forme entre les deux saillies (41) postérieures est limitée latéralement par deux surfaces de commande (28) de la platine (23), inclinées l'une vers l'autre et s'écartant l'une de l'autre en forme de V vers l'arrière, ces surfaces de commande coopérant avec des surfaces de commande (6) inclinées de manière correspondante de l'organe d'ancrage postérieur (5), qui sont prévues à l'extérieur sur une saillie (43) de l'organe d'ancrage (5) postérieur, celle-ci faisant saillie dans la découpe (42).
